(19) 

Europäisches Patentamt
European Patent Office
Office européen des brevets

(11) **EP 2 972 090 B1**

(12) **EUROPEAN PATENT SPECIFICATION**

(45) Date of publication and mention
of the grant of the patent:
**07.05.2025 Bulletin 2025/19**

(21) Application number: **14775044.2**

(22) Date of filing: **13.03.2014**

(51) International Patent Classification (IPC):
**G06Q 10/04** (2023.01)

(52) Cooperative Patent Classification (CPC):
**G06Q 10/04**

(86) International application number:
**PCT/US2014/026469**

(87) International publication number:
**WO 2014/160388 (02.10.2014 Gazette 2014/40)**

(54) **PREDICTING SYSTEM TRAJECTORIES TOWARD CRITICAL TRANSITIONS**

VORHERSAGE VON SYSTEMTRAJEKTORIEN ZU KRITISCHEN ÜBERGÄNGEN

PRÉVISION DE TRAJECTOIRES DE SYSTÈME VERS DES TRANSITIONS CRITIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 US 201361784167 P**
**29.05.2013 US 201313904945**

(43) Date of publication of application:
**20.01.2016 Bulletin 2016/03**

(73) Proprietor: **HRL Laboratories, LLC**
**Malibu, CA 90265 (US)**

(72) Inventors:
• **NI, Kang-Yu**
**Calabasas, CA 91301 (US)**
• **LU, Tsai-Ching**
**Wynnewood, PA 19096 (US)**

(74) Representative: **Boult Wade Tennant LLP**
**Salisbury Square House**
**8 Salisbury Square**
**London EC4Y 8AP (GB)**

(56) References cited:
**EP-A1- 2 535 000      JP-A- 2010 061 450**
**US-B1- 6 865 509**

• **LUNGARELLA ET AL.: "Information transfer at multiple scales", PHYSICAL REVIEW E, 27 November 2007 (2007-11-27), pages 1 - 10**
• **LINDNER ET AL.: "TRENTOOL: A Mat lab open source toolbox to analyse information flow in time series data with transfer entropy", BMC NEUROSCIENCE, 18 November 2011 (2011-11-18), pages 1 - 22**
• **RUNGE ET AL.: "Quantifying causal coupling strength: A lag-specific measure for multivariate time series related to transfer entropy", PHYSICAL REVIEW E, 21 November 2012 (2012-11-21), pages 1 - 15**

EP 2 972 090 B1

**Description**

CROSS-REFERENCE TO RELATED APPLICATIONS

This is a Continuation-in-Part application of U.S. Non-Provisional Application No. 13/904,945, filed in the United States on May 29, 2013, entitled, "Detection and Identification of Directional Influences Using Dynamic Spectrum." This is also a Non-Provisional patent application of U.S. Provisional Application No. 61/784,167, filed in the United States on March 14, 2013, entitled, "Predict System Trajectories Toward Critical Transitions."

FIELD OF INVENTION

The present invention relates to system for automated detection of critical transitions and, more particularly, to a system for automated detection of critical transitions using predicted system trajectories.

BACKGROUND OF INVENTION

One central characteristic of complex social-technological systems is their self-organized emerging interactions which provide the benefits of exchanging information and resources effectively, yet at the same time increases the risk and pace of spreading attacks or failures. A small perturbation on a complex system operating in a high-risk unstable region can induce a critical transition that leads to unstoppable catastrophic failures.

There are a few recent works of early warning signals for heterogeneously networked dynamical systems. Kwon and Yang (see the List of Incorporated Cited Literature References, Literature Reference No. 1) use transfer entropy to analyze financial market data. They calculate pair-wise transfer entropy to form a transfer entropy matrix and demonstrate the asymmetrical influence from mature markets to emerging markets using transfer entropy. Their method estimates global transfer entropy, not local transfer entropy changing in time; therefore, their method cannot handle dynamics and structure changes in directional influence.

Staniek and Lehnertz (see Literature Reference No. 4) introduced a robust and computationally efficient method to estimate transfer entropy using a symbolization technique. Their demonstration of symbolic transfer entropy (STE) on brain electrical activity data shows STE is able to detect the asymmetric dependences and identify the hemisphere containing the epileptic focus without observing actual seizure activity. However, their emphasis is also not on identifying the dynamics of the complex system structure.

Scheffer et al. (see Literature Reference No. 5) surveys state-of-the-art methods that originated in the ecological domain. These methods focus only on homogeneous lattices with signals such as increased temporal correlation, skewness, and spatial correlations of the population dynamics, thus are not able to deal with heterogeneously networked dynamical systems.

Moon and Lu (see Literature References No. 2 and 3) developed a spectral early warning signals (EWS) theory that detects the approaching of critical transitions and can estimate the system structure and network connectivity near critical transitions using the covariance matrix. Although spectral EWS quantifies how much entities of a system are moving together, the symmetric nature of covariance spectrum does not permit the analysis of directional influences among entities.

HRL337-EPO

Lungarella et al., "Information transfer at multiple scales", Physical Review E, 27 November 2007, pages 1 - 10 proposes a wavelet-based extension of transfer entropy.

Thus, a continuing need exists for a system for automated detection of critical transitions in heterogeneously networked dynamical system using an information dynamic spectrum framework that permits analysis of directional influences among entities.

SUMMARY OF INVENTION

The present invention relates to system for predicting critical transitions, and to a corresponding computer implemented method and computer program product, as set forth in the appended independent claims. Other preferred aspects of the present invention are set forth in the dependent claims, as follows.

In another aspect, the system estimates the TE trajectory by the natural logarithm (*ln*) with an unknown coefficient *a* and a constant *c* according to the following:

$$g(t) = a\,ln(t) + c,$$

where $t$ represents time.

In another aspect, the system estimates the unknown coefficient $a$ with various discrete time steps by taking the derivative of $g(t) = a\ ln(t) + c$ to obtain

$$g'(t) = \frac{a}{t},$$

then obtaining a discretized version of the unknown coefficient $a$ according to the following:

$$\frac{\Delta g}{\Delta t} = a\ \frac{1}{t}.$$

In another aspect, the system determines the unknown coefficient $a$ according to the following:

for a fixed timestep $\Delta t$ in a window $[T_{start}, T_{end}]$, determining the following matrix equation:

$$
\begin{bmatrix}
\frac{1}{t_1 + \Delta t/2} \\
\frac{1}{t_2 + \Delta t/2} \\
\vdots \\
\frac{1}{t_k + \Delta t/2}
\end{bmatrix} a =
\begin{bmatrix}
\frac{g(t_1 + \Delta t) - g(t_1)}{\Delta t} \\
\frac{g(t_2 + \Delta t) - g(t_2)}{\Delta t} \\
\vdots \\
\frac{g(t_k + \Delta t) - g(t_k)}{\Delta t}
\end{bmatrix},
$$

where $t_1, ..., t_k + \Delta t \in [T_{start}, T_{end}]$; and
determining an approximation of $a_{\Delta t}$ for the fixed timestep $\Delta t$ according to the following:

$$
a_{\Delta t} = argmin_a \left\|
\begin{bmatrix}
\frac{1}{t_1 + \Delta t/2} \\
\frac{1}{t_2 + \Delta t/2} \\
\vdots \\
\frac{1}{t_k + \Delta t/2}
\end{bmatrix} a -
\begin{bmatrix}
\frac{g(t_1 + \Delta t) - g(t_1)}{\Delta t} \\
\frac{g(t_2 + \Delta t) - g(t_2)}{\Delta t} \\
\vdots \\
\frac{g(t_k + \Delta t) - g(t_k)}{\Delta t}
\end{bmatrix}
\right\|_2,
$$

where argmin represents a minimization, $t_k$ represents a $k^{th}$ time point, and wherein the constant c corresponding to this timestep is

$$c_{\Delta t} = g(T_{end}) - a_{\Delta t}\ ln(T_{end}).$$

In another aspect, the system determines a predicted value for a future time $T_{end} + t_d$ according to the following:

$$F_{\Delta t}(t_d) = a_{\Delta t}\ ln(T_{end} + t_d) + c_{\Delta t},$$

where $t_d$ is the desired time length for prediction.

BRIEF DESCRIPTION OF THE DRAWINGS

The objects, features and advantages of the present invention will be apparent from the following detailed descriptions of the various aspects of the invention in conjunction with reference to the following drawings, where:

FIG. 1 is a block diagram depicting the components of a system for automated detection of critical transitions system according to the principles of the present invention;

FIG. 2 is an illustration of a computer program product according to the principles of the present invention;

FIG. 3A illustrates a non-foster circuit in voltage over time according to prior art;

FIG. 3B illustrates transfer entropy (TE)/associative transfer entropy (ATE)+/ATE- curves over time according to prior art;

FIG. 4A illustrates curve fitting with a plot of the exponential function according to the principles of the present invention;

FIG. 4B illustrates curve fitting with a plot of the logarithmic function according to the principles of the present invention;

FIG. 5 is a plot comparing an actual trajectory to a predicted trajectory according to the principles of the present invention;

FIG. 6A illustrates a prediction cone produced according to the principles of the present invention and the predicted trajectory;

FIG. 6B illustrates a prediction cone produced according to the principles of the present invention and the predicted trajectory; and

FIG. 7 is a flow diagram depicting a system for automated detection of critical transitions according to the principles of the present invention.

DETAILED DESCRIPTION

The present invention relates to a system for automated detection of critical transitions and, more particularly, to a system for automated detection of critical transitions using predicted system trajectories.

The following description is presented to enable one of ordinary skill in the art to make and use the invention and to incorporate it in the context of particular applications. Various modifications, as well as a variety of uses in different applications will be readily apparent to those skilled in the art, and the general principles defined herein may be applied to a wide range of aspects. Thus, the present invention is not intended to be limited to the aspects presented, but is to be accorded the widest scope as set forth in the appended claims.

In the following detailed description, numerous specific details are set forth in order to provide a more thorough understanding of the present invention. However, it will be apparent to one skilled in the art that the present invention may be practiced without necessarily being limited to these specific details, and that the scope of the present invention is that as set forth in the appended claims. In other instances, well-known structures and devices are shown in block diagram form, rather than in detail, in order to avoid obscuring the present invention.

The reader's attention is directed to all papers and documents which are filed concurrently with this specification and which are open to public inspection with this specification.

All the features disclosed in this specification, (including any accompanying claims, abstract, and drawings) may be replaced by alternative features serving the same, equivalent or similar purpose, unless expressly stated otherwise. Thus, unless expressly stated otherwise, each feature disclosed is one example only of a generic series of equivalent or similar features.

Furthermore, any element in a claim that does not explicitly state "means for" performing a specified function, or "step for" performing a specific function, is not to be interpreted as a "means" or "step" clause as specified in 35 U.S.C. Section 112, Paragraph 6. In particular, the use of "step of" or "act of" in the claims herein is not intended to invoke the provisions of 35 U.S.C. 112, Paragraph 6.

Before describing the invention in detail, first a list of cited references is provided. Next, a description of the various principal aspects of the present invention is provided. Subsequently, an introduction provides the reader with a general understanding of the present invention. Finally, specific details of the present invention are provided to give an understanding of the specific aspects.

(1) List of Incorporated Cited Literature References

The following references are cited throughout this application. For clarity and convenience, the references are listed herein as a central resource for the reader.

The references are cited in the application by referring to the corresponding literature reference number.

1. O. Kwon and J.-S. Yang, Information Flow between Stock Indices, 2008 EPL 82 68003.
2. H. Moon and T.-C. Lu, Early Warning Signal of Complex Systems: Network Spectrum and Critical Transitions, WIN 2010.
3. H. Moon and T.-C. Lu, Network Catastrophe: Self-Organized Patterns Reveal both the Instability and the Structure of Complex Networks, preprint, 2012.
4. M. Staniek and K. Lehnertz, Symbolic Transfer Entropy, Physical Review Letters 100, 15801, 2008.
5. M. Scheffer, J. Bascompte, W.A. Brock, V. Brovkin, S.R. Carpenter, V. Dakos, H. Held, E.H. van Nes, M. Rietkerk, and G. Sugihara, Early-warning signals for critical transitions. Nature, 461, 2009.
6. T. Schreiber, Measuring information Transfer, Phys. Rev, Lett. 85, 461, 2000.

(2) Principal Aspects

The present invention has three "principal" aspects. The first is a system for automated detection of critical transitions. The system is typically in the form of a computer system operating software or in the form of a "hard-coded" instruction set. This system may be incorporated into a wide variety of devices that provide different functionalities. The second principal aspect is a method, typically in the form of software, operated using a data processing system (computer). The third principal aspect is a computer program product. The computer program product generally represents computer-readable instructions stored on a non-transitory computer-readable medium such as an optical storage device, e.g., a compact disc (CD) or digital versatile disc (DVD), or a magnetic storage device such as a floppy disk or magnetic tape. Other, non-limiting examples of computer-readable media include hard disks, read-only memory (ROM), and flash-type memories. These aspects will be described in more detail below.

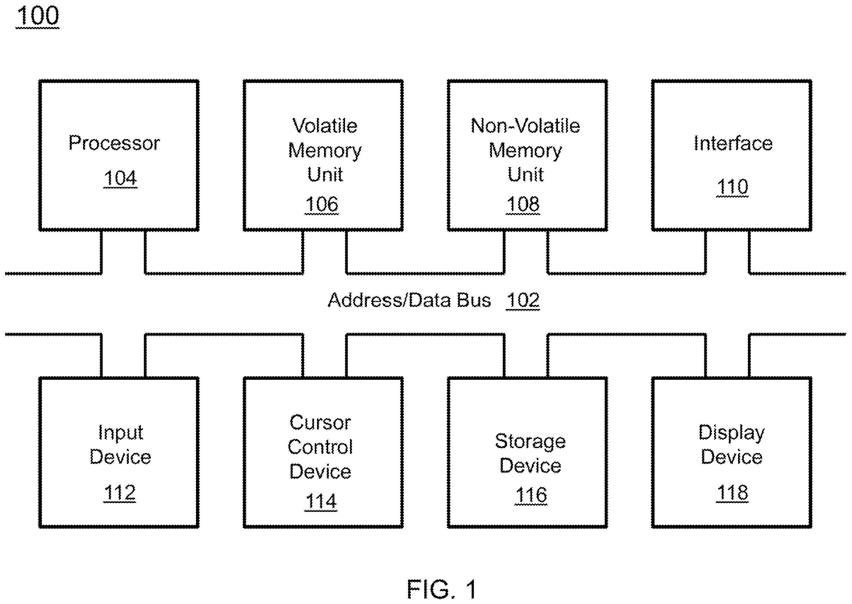

A block diagram depicting an example of a system (i.e., computer system 100) of the present invention is provided in FIG. 1. The computer system 100 is configured to perform calculations, processes, operations, and/or functions associated with a program or algorithm. In one aspect, certain processes and steps discussed herein are realized as a series of instructions (e.g., software program) that reside within computer readable memory units and are executed by one or more processors of the computer system 100. When executed, the instructions cause the computer system 100 to perform specific actions and exhibit specific behavior, such as described herein.

The computer system 100 may include an address/data bus 102 that is configured to communicate information. Additionally, one or more data processing units, such as a processor 104 (or processors), are coupled with the address/data bus 102. The processor 104 is configured to process information and instructions. In an aspect, the processor 104 is a microprocessor. Alternatively, the processor 104 may be a different type of processor such as a parallel processor, or a field programmable gate array.

The computer system 100 is configured to utilize one or more data storage units. The computer system 100 may include a volatile memory unit 106 (e.g., random access memory ("RAM"), static RAM, dynamic RAM, etc.) coupled with the address/data bus 102, wherein a volatile memory unit 106 is configured to store information and instructions for the processor 104. The computer system 100 further may include a nonvolatile memory unit 108 (e.g., read-only memory ("ROM"), programmable ROM ("PROM"), erasable programmable ROM ("EPROM"), electrically erasable programmable ROM "EEPROM"), flash memory, etc.) coupled with the address/data bus 102, wherein the nonvolatile memory unit 108 is configured to store static information and instructions for the processor 104. Alternatively, the computer system 100 may execute instructions retrieved from an online data storage unit such as in "Cloud" computing. In an aspect, the computer system 100 also may include one or more interfaces, such as an interface 110, coupled with the address/data bus 102. The one or more interfaces are configured to enable the computer system 100 to interface with other electronic devices and computer systems. The communication interfaces implemented by the one or more interfaces may include wireline (e.g., serial cables, modems, network adaptors, etc.) and/or wireless (e.g., wireless modems, wireless network adaptors, etc.) communication technology.

In one aspect, the computer system 100 may include an input device 112 coupled with the address/data bus 102, wherein the input device 112 is configured to communicate information and command selections to the processor 100. In accordance with one aspect, the input device 112 is an alphanumeric input device, such as a keyboard, that may include alphanumeric and/or function keys. Alternatively, the input device 112 may be an input device other than an alphanumeric input device. In an aspect, the computer system 100 may include a cursor control device 114 coupled with the address/data bus 102, wherein the cursor control device 114 is configured to communicate user input information and/or command selections to the processor 100. In an aspect, the cursor control device 114 is implemented using a device such as a mouse, a track-ball, a track-pad, an optical tracking device, or a touch screen. The foregoing notwithstanding, in an aspect, the cursor control device 114 is directed and/or activated via input from the input device 112, such as in response to the use of special keys and key sequence commands associated with the input device 112. In an alternative aspect, the cursor control device 114 is configured to be directed or guided by voice commands.

In an aspect, the computer system 100 further may include one or more optional computer usable data storage devices, such as a storage device 116, coupled with the address/data bus 102. The storage device 116 is configured to store information and/or computer executable instructions. In one aspect, the storage device 116 is a storage device such as a magnetic or optical disk drive (e.g., hard disk drive ("HDD"), floppy diskette, compact disk read only memory ("CD-ROM"), digital versatile disk ("DVD")). Pursuant to one aspect, a display device 118 is coupled with the address/data bus 102, wherein the display device 118 is configured to display video and/or graphics. In an aspect, the display device 118 may include a cathode ray tube ("CRT"), liquid crystal display ("LCD"), field emission display ("FED"), plasma display, or any other display device suitable for displaying video and/or graphic images and alphanumeric characters recognizable to a user.

The computer system 100 presented herein is an example computing environment in accordance with an aspect. However, the non-limiting example of the computer system 100 is not strictly limited to being a computer system. For example, an aspect provides that the computer system 100 represents a type of data processing analysis that may be used in accordance with various aspects described herein. Moreover, other computing systems may also be implemented. Indeed, the scope of the present technology is not limited to any single data processing environment, but rather to the scope as set forth in the appended claims. Thus, in an aspect, one or more operations of various aspects of the present technology are controlled or implemented using computer-executable instructions, such as program modules, being executed by a computer. In one implementation, such program modules include routines, programs, objects, components and/or data structures that are configured to perform particular tasks or implement particular abstract data types. In addition, an aspect provides that one or more aspects of the present technology are implemented by utilizing one or more distributed computing environments, such as where tasks are performed by remote processing devices that are linked through a communications network, or such as where various program modules are located in both local and remote computer-storage media including memory-storage devices.

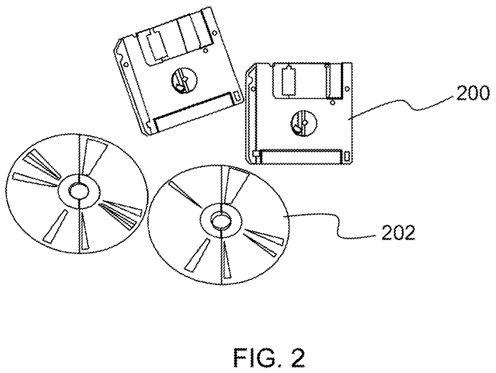

An illustrative diagram of a computer program product (i.e., storage device) embodying the present invention is depicted in FIG. 2. The computer program product is depicted as floppy disk 200 or an optical disk 202 such as a CD or DVD. However, as mentioned previously, the computer program product generally represents computer-readable instructions stored on any compatible non-transitory computer-readable medium. The term "instructions" as used with respect to this invention generally indicates a set of operations to be performed on a computer, and may represent pieces of a whole program or individual, separable, software modules. Non-limiting examples of "instruction" include computer program code (source or object code) and "hard-coded" electronics (i.e. computer operations coded into a computer chip). The "instruction" is stored on any non-transitory computer-readable medium, such as in the memory of a computer or on a floppy disk, a CD-ROM, and a flash drive. In either event, the instructions are encoded on a non-transitory computer-readable medium.

(3) Introduction

One central characteristic of complex social-technological systems is their self-organized emerging interactions which provide the benefits of exchanging information and resources effectively, yet at the same time increase the risk and pace of spreading attacks or failures. A small perturbation on a complex system operating in a high-risk unstable region can induce a critical transition that leads to unstoppable catastrophic failures. In the system according to the principles of the present invention, catastrophic failures can be avoided by detecting early warnings of critical transitions and predicting the likelihood of system trajectories and the lead time to the critical points.

The invention described herein is built upon the invention described in the priority application U.S. application number 13/904,945, entitled, "Detection and Identification of Directional Influences Using Dynamic Spectrum" (hereinafter referred to as the '945 application), which is an information dynamic spectrum framework that goes beyond unidirectional diffusion dynamics to investigate heterogeneously networked dynamical systems with transient directional influence.

The '945 application describes the development of a novel Associative Transfer Entropy (ATE) measure which decomposes the pair-wise directional influence of transfer entropy to associative states of asymmetric, directional information flows. Multivariate time series of complex systems were transformed into the spectrum of Transfer Entropy Matrix (TEM) and Associative Transfer Entropy Matrix (ATEM) to capture information dynamics of the system. The novel spectral radius measures of TEM and ATEM were developed to detect early warning signals of source-driven instability, and induce directional influence structure to identify the source and reveal dynamics of directional influences. The framework described in the '945 application enables one not only to accurately detect, predict, and mitigate abrupt behavior changes in complex systems, but also to understand, design, and build more sustainable and resilient complex systems.

The idea of associative transfer entropy is to decompose transfer entropy (TE) by constraining associated states of two processes. The simplest case of ATE is two influence classes: one positive ATE+ and the other negative ATE-. In this case, ATE is able to distinguish two situations where the amount of information transfer is the same but have opposite effects: the source drives the destination the same direction in ATE+, and the source drives the destination the opposite direction in ATE-. For dynamic data, meaning the amount of information flow is not constant, the TE/ATE of time series in a local time window is calculated, so that TE/ATE becomes a function of time. Such decomposition further enables one to investigate ATEM in the form of ATEM+ and ATEM-.

Given A TE+/TE cross-over signature as the early warning signals of critical transition, the present invention predicts (1) the likelihood of system trajectories and (2) the lead time to critical points. It was first observed that ATE+ and TE are maximized, at the same time that ATE-flattened, prior to the system switching to alternative stable regimes. Therefore, model-based statistical forecasting was applied to estimate the likelihood of ATE+/TE/ATE- trajectories. The lead time is predicted by estimating the critical point based on the projected flattening of ATE-trajectories. The prediction method according to the principles of the present invention will continuously output the update of probabilistic cones as the system progresses. Determining the likelihood and lead time of critical points will enable further developments of a mitigation strategy to avoid critical transitions. Each of these aspects will be described in further detail below.

(4) Specific Details of the Invention

Described is a system to address the need of automated detection of emerging transitions, and identify sources of instability from time series of complex systems. The techniques according to the principles of the present invention can be used to detect directional influences apart from intrinsic dynamics so that one can derive encapsulated interaction modules to predict behavior trajectories. The system according to the principles of the present invention will enable the advancement in analyzing dynamics of complex networks.

Advantages of the system and method described herein include, but are not limited to, (1) providing an effective measure for quantifying associative, asymmetric directional influences, whereas other methods only can handle either symmetric or directional influences; (2) providing an effective formulation for capturing system-wise directional influences, whereas other methods can only handle pair-wise directional influence, or system-wise symmetrical influence; (3) providing an effective measure for detecting instability in systems with directional influence dynamics, whereas other methods assume uti-directional diffusion dynamics; (4) providing an effective method for characterizing instability trends of aggregated directional influences, whereas other methods can only detect instability with simple thresholding; and (5) providing an effective method to reveal sources and structures in changing dynamics of directional influences, whereas other methods can only handle stationary dynamics.

(4.1) Background: Information Dynamic Spectrum

The asymmetric measure, transfer entropy,

$$T_{x_j \to x_i} = $$

$$\sum_{(x_{i,t+1}, x_{i,t}, x_{j,t}) \in D} p\left(x_{i,t+1}, x_{i,t}, x_{j,t}\right) \log \frac{p(x_{i,t+1}|x_{i,t}, x_{j,t})}{p(x_{i,t+1}|x_{i,t})},$$

$$(1)$$

quantifies the amount of information transfer from source $x_j$ to destination $x_i$, It has been used to demonstrate the asymmetrical influence from mature markets to emerging markets by analyzing stock market indices, as described in Literature Reference Nos. 1 and 6. Yet, current state-of-the-art only considers average pair-wise information transfers and statistical analysis, without including the more fundamental object of an information dynamic spectrum (i.e., time-varying information transfer) to explain the emergence of directional influences.

In the previously developed information dynamic spectrum theory described in the '945 application, the dynamics of a complex network were formulated as: $dX = F(X)dt + \sigma dW$, where $F: \mathbb{R}^m \to \mathbb{R}^m$ is a differentiable function that explains the dynamics of the system of $m$ elements $X(t) = [x_1(t)\, x_2(t) \ldots x_m(t)]^T$ and is defined by $F(X(t)) = [f_1(X(t))\, f_2(X(t)) \ldots f_m(X(t))]^T$. This captures both the dynamics of individual entities and the networked interactions between the entities. For example, element $x_i(t)$ can be the $i$th stock index of the $i$th trading day. The last term, $\sigma dW$, corresponds to white noise scaled by $\sigma$. To reveal the unknown $F(X)$, this problem is further simplified by linear approximation: $F(X) \approx F(X_0) + J(X_0)(X - X_0)$, for $X$

$$J = \left[\frac{\partial f_i}{\partial x_j}\right]_{i,j=1,\ldots,m}$$

near $X_0$, where $\qquad$ is the Jacobian matrix. Therefore, the local temporal dynamics can be obtained pair-wise. The measure associative transfer entropy (ATE) at state $D_k$, for $i \neq j$ is defined by:

$$T^{D_k}_{x_j \to x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

(2)

where $D_k$ is a subset of $D$ that represents a certain associated state between $x_i$ and $x_j$. The purpose of ATE is to capture information transfer between two variables for a particular state association. For example, TE may be decomposed into two influence classes: one positive and the other negative.

If the internal dynamics within each node is negligible comparing to interactions among nodes, it is conjectured that

$$\frac{\partial f_i}{\partial x_j} \sim g\left(T^{D_1}_{x_j \to x_i}, T^{D_2}_{x_j \to x_i}, \ldots, T^{D_s}_{x_j \to x_i}\right),$$

for some linear function $g$. Let $T^{D_k}$ be an associative transfer entropy matrix (ATEM).

$$T^{D_k} = \begin{bmatrix} T^{D_k}_{x_1 \to x_1} & T^{D_k}_{x_2 \to x_1} & \cdots & T^{D_k}_{x_m \to x_1} \\ T^{D_k}_{x_1 \to x_2} & T^{D_k}_{x_2 \to x_2} & \cdots & T^{D_k}_{x_m \to x_2} \\ & & \vdots & \\ T^{D_k}_{x_1 \to x_m} & T^{D_k}_{x_2 \to x_m} & \cdots & T^{D_k}_{x_m \to x_m} \end{bmatrix}. \qquad (3)$$

To appropriately deal with dynamic data, meaning the amount of information flow from one to another is not static, TE/ATE curves were generated as functions of time, calculated over sliding windows.

Since the TEM matrix is non-symmetric, its eigenvalues are complex-valued. The spectral radius of the TEM matrix is used to measure the total amount of information flow of the entire network.

To efficiently estimate transfer entropy of continuous data, Staniek and Lehnertz (see Literature Reference No. 4) proposed a method using a symbolization technique that is robust and computationally fast, which had been introduced with the concept of permutation entropy. In the '945 application, the symbolization technique of Staniek and Lehnertz was adapted to calculate ATE. Specifically, the continuous-valued time sequence $\{x(t)\}_{t=1}^N$ was symbolized by first ordering the values of $\{x(t), x(t+1), \ldots x(t+m)\}$ with $\{1, 2, \ldots, m\}$ and denoting $\bar{x}(t) = $ associated permutation of order $m$ the symbol of $x(t)$ at $t$. Then, the ATE of $\{x(t)\}_{t=1}^N$ is estimated by calculating ATE of $\{\bar{x}(t)\}_{t=1}^N$.

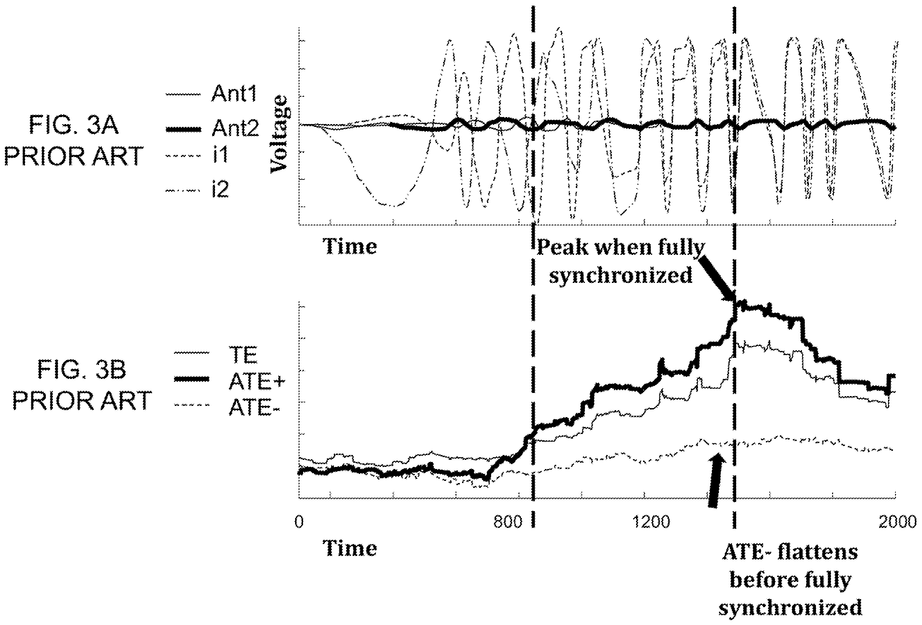

FIGs. 3A and 3B show an ATE analysis of a non-foster network from the invention described in the '945 application. The circuit is initially operated in the stable region, where there is no oscillation. Then a small perturbation is added. It is unknown whether the circuit will become oscillatory (unstable) or stay stable. An ATE analysis was performed to detect if the circuits would become synchronized (unstable). The plot in FIG. 3A is the circuit in voltage over time, where Ant1 represents Antenna 1, Ant2 represents Antenna 2, i1 represents port 1, and i2 represents port 2. The plot in FIG. 3B shows the TE/ATE+/ATE- curves over time. The curves are obtained from the absolute sum of spectrum of TEM/ATEM+/ATEM-, respectively. It was found that the spectral radius of TEM/ATEM+/ATEM- also show similar outcomes, but since TEM is the sum of ATEM+ and ATEM-, the ATE+ curve will never cross the TE curve. Thus, the absolute sum of the spectrum is more informative. As shown in FIG. 3B, the ATE+ curve crosses over the TE curve near time point 800, indicating the increasing in synchronization. In addition, the ATE+ curve reaches its peak right before full synchronization, while the ATE- curve flattens because there is no negative association.

(4.2) Probabilistic Cones for Trajectories Prediction

In the system according to the principles of the present invention, model-based statistical forecasting is used to estimate the TE/ATE+/ATE-trajectories. An advantage of analyzing the TE/ATE curves is that TE/ATE removes the spikes of the raw data, as shown in the circuit data example in FIG. 3A. It has been observed that the TE curve in this case can be well approximated by the natural logarithm with an unknown coefficient $a$ and a constant $c$ according to the following:

$$g(t) = a\,ln(t) + c \,. \qquad (4)$$

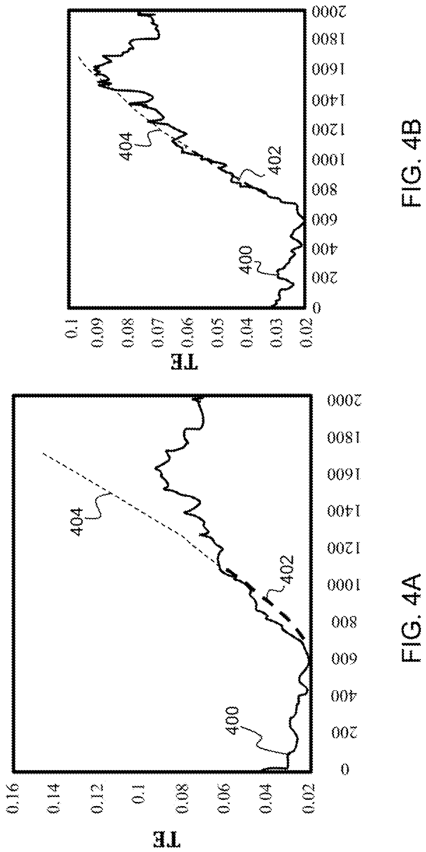

FIG. 4A shows curve fitting with a plot of the exponential function, and FIG. 4B illustrates curve fitting with a plot of the logarithmic function. The bold solid curves 400 are the TE curve from FIG. 3B. The bold dashed curves 402 are the fitted curves in the interval $t \in [700, 1100]$. The unbolded dashed curves 404 are the projections from the fitted curves. FIG. 4B shows that the logarithm is appropriate to fit the TE curve.

To estimate the coefficient a from TE/ATE$\pm$ curves, instead of fitting them deterministically with the logarithmic function in equation (4), the rate of change was estimated with various discrete time steps. This generates a prediction cone, which will be described in detail below. From the derivative of equation (4),

$$g'(t) = \frac{a}{t}, \qquad (5)$$

the following discretized version for the unknown $a$ was obtained:

$$\frac{\Delta g}{\Delta t} = a\,\frac{1}{t}, \qquad (6)$$

For a fixed timestep $\Delta t$ in a window $[T_{start}, T_{end}]$, the least squares was used to solve the unknown $a$. First, the following matrix equation was written:

$$\begin{bmatrix} \frac{1}{t_1 + \Delta t/2} \\ \frac{1}{t_2 + \Delta t/2} \\ \vdots \\ \frac{1}{t_k + \Delta t/2} \end{bmatrix} a = \begin{bmatrix} \frac{g(t_1 + \Delta t) - g(t_1)}{\Delta t} \\ \frac{g(t_2 + \Delta t) - g(t_2)}{\Delta t} \\ \vdots \\ \frac{g(t_k + \Delta t) - g(t_k)}{\Delta t} \end{bmatrix}, \qquad (7)$$

where $t_1, ..., t_k + \Delta t \in [T_{start}, T_{end}]$, where $t_k$ is the $k^{th}$ time point. The approximation of $a_{\Delta t}$ for the fixed timestep $\Delta t$ was then obtained according to the following:

$$a_{\Delta t} = argmin_a \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2 .$$

(8)

The constant corresponding to this timestep is then $c_{\Delta t} = g(T_{end}) - a_{\Delta t} \ln(T_{end})$. Therefore, the predicted value for the future time $T_{end} + t_d$ is

$$F_{\Delta t}(t_d) = a_{\Delta t} \, \ln(T_{end} + t_d) + c_{\Delta t} , \qquad (9)$$

$t_d$ is the desired time length for prediction.

Now that a method to estimate the constants $c$ and $a$ has been established, a probabilistic prediction cone (or light cone) can be generated at each time point as one varies $\Delta t$ to obtain multiple estimates of $c$ and $a$. Therefore, a probabilistic prediction cone at a given time consists of a collection of natural logarithm curves starting from that point.

To estimate the error of this prediction for the immediate next timestep, the following was calculated:

$$error_{\Delta t}(i) = g(t_i + \Delta t) - [a_{\Delta t} \, \ln(t_i + \Delta t) + c(i)] , \qquad (10)$$

where

$$c(i) = g(t_{i-1}) - a_{\Delta t} \, \ln(t_{i-1}) . \qquad (11)$$

Let $E$ be the collection of all $error_{\Delta t}$ over all timesteps $\Delta t$ and let $\sigma$ = standard deviation of $E$. Let $G$ be the collection of all predicted values $G_{\Delta t}(t_d)$ over all timesteps $\Delta t$ and $\mu$ = mean($G$). Therefore, the 95% confidence interval for the future time $T_{end} + t_d$ is:

$$CI = \left[ \mu - 1.96\frac{\sigma}{\sqrt{N}}, \ \mu + 1.96\frac{\sigma}{\sqrt{N}} \right] , \qquad (12)$$

where $N$ is the size of $E$.

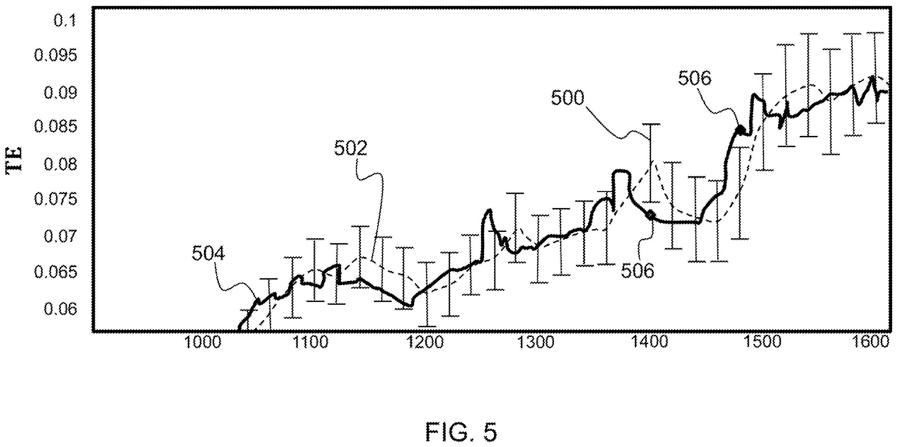

FIG. 5 shows the 95% confidence interval of a predicted trajectory in unbolded solid lines 500. The predicted trajectory for TE is represented by the unbolded dashed line 502. The bold solid line 504 depicts the actual trajectory of TE. The prediction value and confidence interval are generated from the prediction cones, described above. Two points of the actual trajectory were outside the 95% confidence interval, right before the non-foster circuits were fully synched around time t=1500. These points are represented by diamonds 506 and indicate the possibility of a trend toward a critical transition.

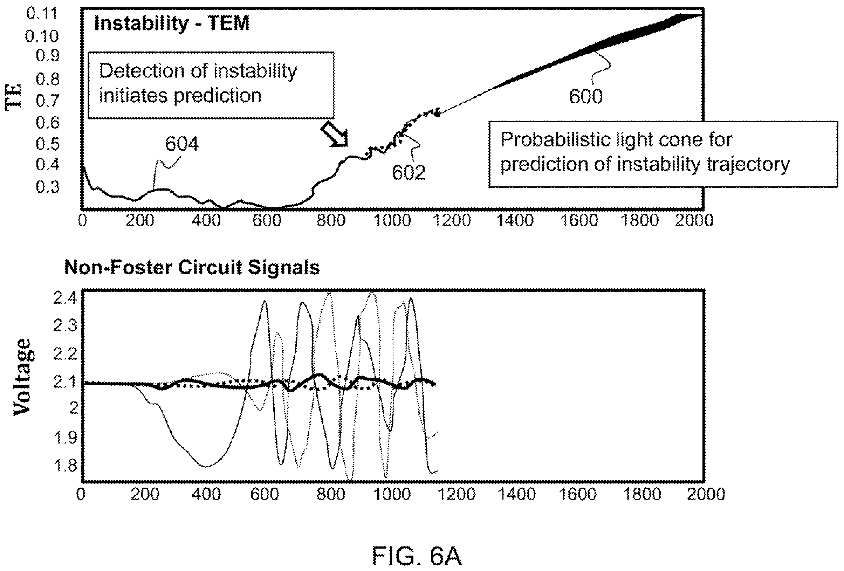

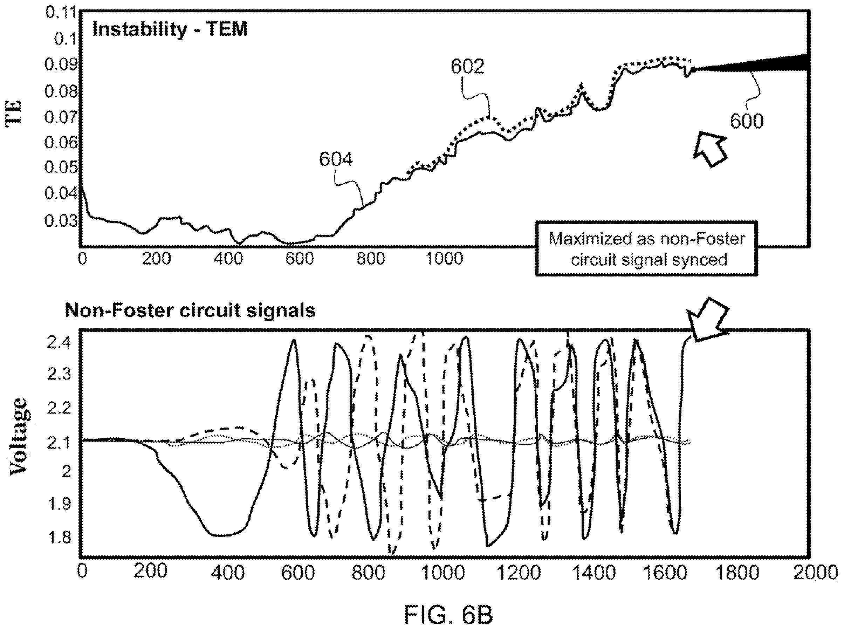

FIGs. 6A and 6B illustrate two time snapshots of the prediction cones 600 produced according to the method described above and the predicted trajectory value (represented by bold dashed curves 602). The prediction cones are used to generate the prediction values with confidence intervals in FIG 5. The solid bold curves 604 represent the actual TE trajectory.

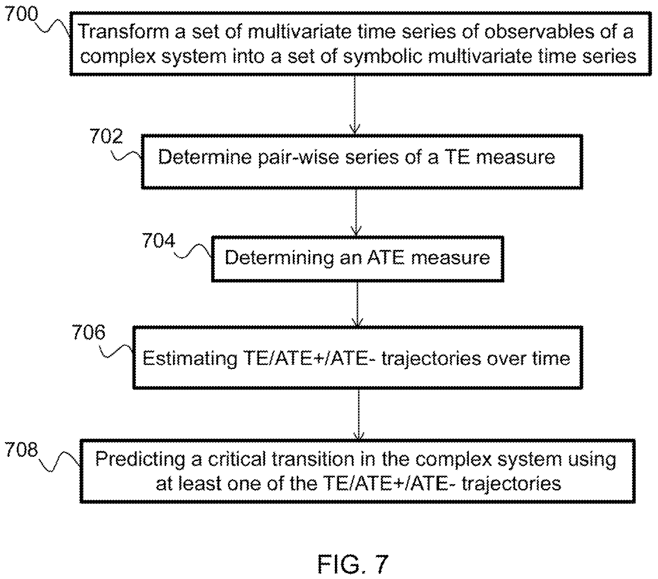

FIG. 7 is a flow diagram depicting the system for predicting system trajectories toward critical transitions according to the principles of the present invention. In a first step 700, a set of multivariate time series of observables of a complex system is transformed into a set of symbolic multivariate time series. In a second step 702, the system determines pair-wise time series of a TE measure. In a third step 704, an ATE measure is determined. In a fourth step 706, the system estimates ATE+, TE, and ATE- trajectories over time. In a fifth step 708, a critical transition in the system is predicted using at least one of the ATE+, TE, and ATE-trajectories.

In summary, the present invention is a system and method for analyzing time series of complex systems to detect trends toward critical transitions, especially for complex systems with directional influence dynamics. The described system and method can be deployed as embedded decision support modules to provide early indication of critical transitions in complex systems, including, but not limited to, vehicle health management, prognostics for complex electronics, crisis management in supply chains, social unrests, financial market instability, and epileptic seizures in brain networks. The technology described herein will result in accurate detection of upcoming critical transitions of system behaviors, accurate characterization of instability trends toward critical transitions, and accurate identification of instability sources and propagation structure changes. Applications of the present invention included, but are not limited to, vehicle health management, complex electronics, smart power grid, social network analysis, social instability, supply-chain crisis management, cyber security, and epileptic seizure detection.

**Claims**

1. A system for predicting critical transitions, the system comprising:

   an electronic circuit having a plurality of components, each component having a time series of voltage measurements; and
   one or more processors (104) and a non-transitory computer-readable medium (108) having executable instructions encoded thereon such that when executed, the one or more processors perform operations of:

   transforming the time series of voltage measurements from the plurality of components of the electronic circuit into a set of symbolic multivariate time series;
   determining a transfer entropy (TE) measure between two time series in the set of symbolic multivariate time series over a sliding time window;
   determining an associative transfer entropy (ATE) measure, wherein the ATE measure is comprised of an ATE+ positive influence class and an ATE- negative influence class, and wherein the ATE measure captures information transfer for a state association $D_k$, between a variable $x_j$ and a variable $x_i$, for $i \neq j$ according to the following:

   $$T_{x_j \to x_i}^{D_k} =$$

   $$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

   where $\Sigma$ represents a summation, $t$ represents a unit of time, $p$ represents a joint probability of the variables, and | represents a conditional probability, wherein the variables $x_j$ and $x_i$ represent states of at least one component of the electric circuit;
   estimating ATE+, TE, and ATE- trajectories over time; and
   based on the estimated ATE+, TE, and ATE- trajectories, predicting instability in the electronic circuit.

2. The system as set forth in Claim 1, wherein the one or more processors further perform an operation of estimating the TE trajectory by the natural logarithm (*ln*) with an unknown coefficient *a* and a constant c according to the following:

   $$g(t) = a\, l\, n(t) + c\,,$$

   where *g(t)* represents the estimated TE trajectory, and where *t* represents time.

3. The system as set forth in Claim 2, wherein the one or more processors further perform an operation of estimating the unknown coefficient *a* with various discrete time steps by taking the derivative of *g(t) = a ln(t) + c* to obtain

   $$g'(t) = \frac{a}{t}\,,$$

   then obtaining a discretized version of the unknown coefficient *a* according to the following:

$$\frac{\Delta g}{\Delta t} = a \ \frac{1}{t}.$$

4. The system as set forth in Claim 3, wherein the one or more processors further perform an operation of determining the unknown coefficient *a* according to the following:

for a fixed timestep $\Delta t$ in a window $[T_{start}, T_{end}]$, determining the following matrix equation:

$$\begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a = \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix},$$

where $t_1, ..., t_k + \Delta t$ E $[T_{start}, T_{end}]$; and
determining an approximation of $a_{\Delta t}$ for the fixed timestep $\Delta t$ according to the following:

$$a_{\Delta t} = \underset{a}{argmin} \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2,$$

where $argmin_a$ represents a minimization, $t_k$ represents a $k^{th}$ timestep, and wherein the constant c corresponding to this timestep is

$$c_{\Delta t} = g(T_{end}) - a_{\Delta t} \ln(T_{end}).$$

5. The system as set forth in Claim 4, wherein the one or more processors further perform an operation of determining a predicted value for a future time $T_{end} + t_d$ according to the following:

$$F_{\Delta t}(t_d) = a_{\Delta t} \ln(T_{end} + t_d) + c_{\Delta t},$$

where $F_{\Delta t}$ is a predicted value for a future time, and where $t_d$ is a desired time length for prediction.

6. A computer-implemented method for predicting critical transitions in an electronic circuit having a plurality of components, comprising an act of:
causing one or more processors (104) to execute instructions stored on a non-transitory memory (108) such that upon execution, the one or more processors perform operations of:

transforming time series of voltage measurements from the plurality of components of the electronic circuit into a set of symbolic multivariate time series;
determining a transfer entropy (TE) measure between two time series in the set of symbolic multivariate time series over a sliding time window;
determining an associative transfer entropy (ATE) measure, wherein the ATE measure is comprised of an ATE+ positive influence class and an ATE- negative influence class, and wherein the ATE measure captures information transfer for a state association $D_k$, between a variable $x_j$ and a variable $x_i$, for i $\neq$ j according to the following:

$$T^{D_k}_{x_j \to x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

where $\Sigma$ represents a summation, $t$ represents a unit of time, $p$ represents a joint probability of the variables, and $|$ represents a conditional probability, wherein the variables $x_j$ and $x_i$ represent states of at least one component of the electric circuit;
estimating ATE+, TE, and ATE- trajectories over time; and
based on the estimated ATE+, TE, and ATE- trajectories, predicting instability in the electronic circuit.

7. The method as set forth in Claim 6, wherein the one or more processors further perform an operation of estimating the TE trajectory by the natural logarithm ($ln$) with an unknown coefficient $a$ and a constant $c$ according to the following:

$$g(t) = a\, l\, n(t) + c\,,$$

where $g(t)$ represents the estimated TE trajectory, and where $t$ represents time.

8. The method as set forth in Claim 7, wherein the data processor further performs an operation of estimating the unknown coefficient $a$ with various discrete time steps by taking the derivative of $g(t) = a\, ln(t) + c$ to obtain

$$g'(t) = \frac{a}{t}\,,$$

then obtaining a discretized version of the unknown coefficient $a$ according to the following:

$$\frac{\Delta g}{\Delta t} = a\,\frac{1}{t}\,.$$

9. The method as set forth in Claim 8, wherein the data processor further performs an operation of determining the unknown coefficient $a$ according to the following:

for a fixed timestep $\Delta t$ in a window $[T_{start}, T_{end}]$, determining the following matrix equation:

$$\begin{bmatrix} \dfrac{1}{t_1 + \Delta t/2} \\ \dfrac{1}{t_2 + \Delta t/2} \\ \vdots \\ \dfrac{1}{t_k + \Delta t/2} \end{bmatrix} a = \begin{bmatrix} \dfrac{g(t_1 + \Delta t) - g(t_1)}{\Delta t} \\ \dfrac{g(t_2 + \Delta t) - g(t_2)}{\Delta t} \\ \vdots \\ \dfrac{g(t_k + \Delta t) - g(t_k)}{\Delta t} \end{bmatrix},$$

where $t_1, ..., t_k + \Delta t \in [T_{start}, T_{end}]$; and
determining an approximation of $a_{\Delta t}$ for the fixed timestep $\Delta t$ according to the following:

EP 2 972 090 B1

$$a_{\Delta t} = \underset{a}{argmin} \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2 ,$$

where $argmin_a$ represents a minimization, $t_k$ represents a $k^{th}$ timestep, and wherein the constant c corresponding to this timestep is

$$c_{\Delta t} = g(T_{end}) - a_{\Delta t} \ln(T_{end}).$$

10. The method as set forth in Claim 9, wherein the data processor further performs an operation of determining a predicted value for a future time $T_{end} + t_d$ according to the following:

$$F_{\Delta t}(t_d) = a_{\Delta t} \ln(T_{end} + t_d) + c_{\Delta t},$$

where $F_{\Delta t}$ is a predicted value for a future time, and where $t_d$ is a desired time length for prediction.

11. A computer program product for predicting critical transitions in an electronic circuit having a plurality of components, the computer program product comprising computer-readable instructions stored on a non-transitory computer-readable medium (108) that are executable by a computer having a processor (104) for causing the processor to perform operations of:

transforming time series of voltage measurements from the plurality of components of the electronic circuit into a set of symbolic multivariate time series;
determining a transfer entropy (TE) measure between two time series in the set of symbolic multivariate time series over a sliding time window;
determining an associative transfer entropy (ATE) measure, wherein the ATE measure is comprised of an ATE+ positive influence class and an ATE- negative influence class, and wherein the ATE measure captures information transfer for a state association $D_k$, between a variable $x_j$ and a variable $x_i$, for i ≠ j according to the following:

$$T^{D_k}_{x_j \rightarrow x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

where Σ represents a summation, $t$ represents a unit of time, $p$ represents a joint probability of the variables, and | represents a conditional probability, wherein the variables $x_j$ and $x_i$ represent states of at least one component of the electric circuit;
estimating ATE+, TE, and ATE- trajectories over time; and
based on the estimated ATE+, TE, and ATE- trajectories, predicting instability in the electronic circuit.

12. The computer program product as set forth in Claim 11, further comprising instructions for causing the processor to perform an operation of estimating the TE trajectory by the natural logarithm (*ln*) with an unknown coefficient *a* and a constant *c* according to the following:

$$g(t) = a \, ln(t) + c \,,$$

where *g(t)* represents the estimated TE trajectory, and where *t* represents time.

14

13. The computer program product as set forth in Claim 12, further comprising instructions for causing the processor to perform an operation of estimating the unknown coefficient *a* with various discrete time steps by taking the derivative of $g(t) = a\, l\, n(t) + c$ to obtain

$$g'(t) = \frac{a}{t},$$

then obtaining a discretized version of the unknown coefficient *a* according to the following:

$$\frac{\Delta g}{\Delta t} = a\,\frac{1}{t}.$$

14. The computer program product as set forth in Claim 13, further comprising instructions for causing the processor to perform an operation of determining the unknown coefficient *a* according to the following:
for a fixed timestep $\Delta t$ in a window $[T_{start}, T_{end}]$, determining the following matrix equation:

$$\begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a = \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix},$$

where $t_1, ..., t_k + \Delta t \in [T_{start}, T_{end}]$; and
determining an approximation of $a_{\Delta t}$ for the fixed timestep $\Delta t$ according to the following:

$$a_{\Delta t} = \underset{a}{argmin} \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2,$$

where $argmin_a$ represents a minimization, $t_k$ represents a $k^{th}$ time point, and wherein the constant *c* corresponding to this timestep is

$$c_{\Delta t} = g(T_{end}) - a_{\Delta t} \ln(T_{end}).$$

15. The computer program product as set forth in Claim 14, further comprising instructions for causing the processor to perform an operation of determining a predicted value for a future time $T_{end} + t_d$ according to the following:

$$F_{\Delta t}(t_d) = a_{\Delta t} \ln(T_{end} + t_d) + c_{\Delta t},$$

where $F_{\Delta t}$ is a predicted value for a future time, and where $t_d$ is a desired time length for prediction.

**Patentansprüche**

1. System zum Vorhersagen kritischer Übergänge, wobei das System umfasst:

   eine elektronische Schaltung, welche eine Mehrzahl von Komponenten aufweist, wobei jede Komponente eine Zeitreihe von Spannungsmessungen aufweist; und
   einen oder mehrere Prozessoren (104) und ein nicht-transitorisches computerlesbares Medium (108), welches ausführbare Anweisungen aufweist, welche darauf verschlüsselt sind, so dass sie, wenn sie ausgeführt werden, veranlassen, dass der eine oder die mehreren Prozessoren folgende Vorgänge durchführen:

      Umwandeln der Zeitreihen von Spannungsmessungen von der Mehrzahl von Komponenten der elektronischen Schaltung in einen Satz symbolischer multivariater Zeitreihen;
      Bestimmen eines Transferentropie- (TE) -Ausmaßes zwischen zwei Zeitreihen in dem Satz symbolischer multivariater Zeitreihen über ein gleitendes Zeitfenster;
      Bestimmen eines assoziativen Transferentropie- (ATE) -Ausmaßes, wobei das ATE-Ausmaß aus einer positiven ATE+ Einflussklasse und einer negativen ATE-Einflussklasse zusammengesetzt ist und wobei das ATE-Ausmaß einen Informationstransfer für eine Zustandsassoziation $D_k$ erfasst, zwischen einer Variablen $x_j$ und einer Variablen $x_i$, für $i \neq j$ gemäß dem Folgenden:

$$T^{D_k}_{x_j \to x_i} =$$

$$\sum\nolimits_{(x_{i,t+1}, x_{i,t}, x_{j,t}) \in D_k} p(x_{i,t+1}, x_{i,t}, x_{j,t}) \log \frac{p(x_{i,t+1} | x_{i,t}, x_{j,t})}{p(x_{i,t+1} | x_{i,t})},$$

      wobei $\sum$ eine Summierung darstellt, t eine Zeiteinheit darstellt, p eine gemeinsame Wahrscheinlichkeit der Variablen darstellt und | eine bedingte Wahrscheinlichkeit darstellt, wobei die Variablen $x_j$ und $x_i$ Zustände wenigstens einer Komponente der elektrischen Schaltung darstellen;
      Schätzen von ATE+, TE und ATE- Trajektorien über die Zeit; und
      auf Grundlage der geschätzten ATE+, TE und ATE- Trajektorien, Vorhersagen einer Instabilität in der elektronischen Schaltung.

2. System nach Anspruch 1, wobei der eine oder die mehreren Prozessoren ferner einen Vorgang eines Schätzens der TE Trajektorie durchführen, durch den natürlichen Logarithmus (*ln*) mit einem unbekannten Koeffizienten *a* und einer Konstanten *c* gemäß dem Folgenden

$$g(t) = a\, ln(t) + c,$$

   wobei *g(t)* die geschätzte TE Trajektorie darstellt und wobei *t* die Zeit darstellt.

3. System nach Anspruch 2, wobei der eine oder die mehreren Prozessoren ferner einen Vorgang eines Schätzens des unbekannten Koeffizienten a mit verschiedenen diskreten Zeitschritten durchführen, durch ein Nehmen der Ableitung von *g(t)* = a *ln(t)* + *c,* um zu erhalten:

$$g'(t) = \frac{a}{t},$$

   dann eines Erhaltens einer diskretisierten Version des unbekannten Koeffizienten *a* gemäß dem Folgenden

$$\frac{\Delta g}{\Delta t} = a\, \frac{1}{t}.$$

4. System nach Anspruch 3, wobei der eine oder die mehreren Prozessoren ferner einen Vorgang eines Bestimmens des unbekannten Koeffizienten *a* durchführen, gemäß dem Folgenden:

für einen fixierten Zeitschritt $\Delta t$ in einem Fenster [$T_{start}$, $T_{end}$], Bestimmen der folgenden Matrixgleichung:

$$\begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a = \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix},$$

wobei $t_1, ..., t_k + \Delta t \in [T_{start}, T_{end}]$; und
Bestimmen einer Näherung von $a_{\Delta t}$ für den fixierten Zeitschritt $\Delta t$ gemäß dem Folgenden:

$$a_{\Delta t} = \underset{a}{argmin} \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2,$$

wobei *argmin$_a$* eine Minimierung darstellt, $t_k$ einen k-ten Zeitschritt darstellt und wobei die diesem Zeitschritt entsprechende Konstante *c* ist:

$$c_{\Delta t} = g(T_{\text{end}}) - a_{\Delta t} \ln(T_{\text{end}}).$$

5. System nach Anspruch 4, wobei der eine oder die mehreren Prozessoren ferner einen Vorgang eines Bestimmens eines vorhergesagten Werts für eine zukünftige Zeit $T_{\text{end}} + t_d$ durchführen, gemäß dem Folgenden:

$$F_{\Delta t}(t_d) = a_{\Delta t} \ln(T_{\text{end}} + t_d) + c_{\Delta t},$$

wobei $F_{\Delta t}$ ein vorhergesagter Wert für eine zukünftige Zeit ist und wobei $t_d$ eine gewünschte Zeitdauer für eine Vorhersage ist.

6. Computerimplementiertes Verfahren zum Vorhersagen kritischer Übergänge in einer elektronischen Schaltung, welche eine Mehrzahl von Komponenten aufweist, umfassend eine folgende Handlung:
Veranlassen, dass ein oder mehrere Prozessoren (104) Anweisungen ausführen, welche auf einem nicht-transitorischen Speicher (108) gespeichert sind, so dass auf eine Ausführung hin der eine oder die mehreren Prozessoren folgende Vorgänge durchführen:

Umwandeln von Zeitreihen von Spannungsmessungen von der Mehrzahl von Komponenten der elektronischen Schaltung in einen Satz symbolischer multivariater Zeitreihen;
Bestimmen eines Transferentropie- (TE) -Ausmaßes zwischen zwei Zeitreihen in dem Satz symbolischer multivariater Zeitreihen über ein gleitendes Zeitfenster;
Bestimmen eines assoziativen Transferentropie- (ATE) -Ausmaßes, wobei das ATE-Ausmaß aus einer positiven ATE+ Einflussklasse und einer negativen ATE-Einflussklasse zusammengesetzt ist und wobei das ATE-Ausmaß einen Informationstransfer für eine Zustandsassoziation $D_k$ erfasst, zwischen einer Variablen $x_j$ und einer

Variablen $x_i$, für $i \neq j$ gemäß dem Folgenden:

$$T^{D_k}_{x_j \to x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1} | x_{i,t}, x_{j,t})}{p(x_{i,t+1} | x_{i,t})},$$

wobei $\sum$ eine Summierung darstellt, $t$ eine Zeiteinheit darstellt, $p$ eine gemeinsame Wahrscheinlichkeit der Variablen darstellt und | eine bedingte Wahrscheinlichkeit darstellt, wobei die Variablen $x_j$ und $x_i$ Zustände wenigstens einer Komponente der elektrischen Schaltung darstellen;
Schätzen von ATE+, TE und ATE- Trajektorien über die Zeit; und
auf Grundlage der geschätzten ATE+, TE und ATE- Trajektorien, Vorhersagen einer Instabilität in der elektronischen Schaltung.

7. Verfahren nach Anspruch 6, wobei der eine oder die mehreren Prozessoren ferner einen Vorgang eines Schätzens der TE Trajektorie durchführen, durch den natürlichen Logarithmus (*ln*) mit einem unbekannten Koeffizienten $a$ und einer Konstanten $c$ gemäß dem Folgenden

$$g(t) = a \, ln(t) + c,$$

wobei $g(t)$ die geschätzte TE Trajektorie darstellt und wobei $t$ die Zeit darstellt.

8. Verfahren nach Anspruch 7, wobei der Datenprozessor ferner einen Vorgang eines Schätzens des unbekannten Koeffizienten $a$ mit verschiedenen diskreten Zeitschritten durchführt, durch ein Nehmen der Ableitung von $g(t) = a \ln(t) + c$, um zu erhalten:

$$g'(t) = \frac{a}{t},$$

dann eines Erhaltens einer diskretisierten Version des unbekannten Koeffizienten $a$ gemäß dem Folgenden

$$\frac{\Delta g}{\Delta t} = a \, \frac{1}{t}.$$

9. Verfahren nach Anspruch 8, wobei der Datenprozessor ferner einen Vorgang eines Bestimmens des unbekannten Koeffizienten $a$ durchführt, gemäß dem Folgenden:

für einen fixierten Zeitschritt $\Delta t$ in einem Fenster $[T_{start}, T_{end}]$, Bestimmen der folgenden Matrixgleichung:

$$\begin{bmatrix} \dfrac{1}{t_1 + \Delta t/2} \\ \dfrac{1}{t_2 + \Delta t/2} \\ \vdots \\ \dfrac{1}{t_k + \Delta t/2} \end{bmatrix} a = \begin{bmatrix} \dfrac{g(t_1 + \Delta t) - g(t_1)}{\Delta t} \\ \dfrac{g(t_2 + \Delta t) - g(t_2)}{\Delta t} \\ \vdots \\ \dfrac{g(t_k + \Delta t) - g(t_k)}{\Delta t} \end{bmatrix},$$

wobei $t_1, ..., t_k + \Delta t \in [T_{start}, T_{end}]$; und

Bestimmen einer Näherung von $a_{\Delta t}$ für den fixierten Zeitschritt $\Delta t$ gemäß dem Folgenden:

$$a_{\Delta t} = \underset{a}{argmin} \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2 ,$$

wobei $argmin_a$ eine Minimierung darstellt, $t_k$ einen k-ten Zeitschritt darstellt und wobei die diesem Zeitschritt entsprechende Konstante $c$ ist:

$$c_{\Delta t} = g(T_{\text{end}}) - a_{\Delta t} \ln(T_{\text{end}}).$$

10. Verfahren nach Anspruch 9, wobei der Datenprozessor ferner einen Vorgang eines Bestimmens eines vorhergesagten Werts für eine zukünftige Zeit $T_{\text{end}} + t_d$ durchführt, gemäß dem Folgenden:

$$F_{\Delta t}(t_d) = a_{\Delta t} \ln(T_{\text{end}} + t_d) + c_{\Delta t},$$

wobei $F_{\Delta t}$ ein vorhergesagter Wert für eine zukünftige Zeit ist und wobei $t_d$ eine gewünschte Zeitdauer für eine Vorhersage ist.

11. Computerprogrammprodukt zum Vorhersagen kritischer Übergänge in einer elektronischen Schaltung, welche eine Mehrzahl von Komponenten aufweist, wobei das Computerprogrammprodukt auf einem nicht-transitorischen computerlesbaren Medium (108) gespeicherte computerlesbare Anweisungen umfasst, welche durch einen Computer ausführbar sind, welcher einen Prozessor (104) aufweist, zum Veranlassen, dass der Prozessor folgende Vorgänge durchführt:

Umwandeln von Zeitreihen von Spannungsmessungen von der Mehrzahl von Komponenten der elektronischen Schaltung in einen Satz symbolischer multivariater Zeitreihen;
Bestimmen eines Transferentropie- (TE) -Ausmaßes zwischen zwei Zeitreihen in dem Satz symbolischer multivariater Zeitreihen über ein gleitendes Zeitfenster;
Bestimmen eines assoziativen Transferentropie- (ATE) -Ausmaßes, wobei das ATE-Ausmaß aus einer positiven ATE+ Einflussklasse und einer negativen ATE-Einflussklasse zusammengesetzt ist und wobei das ATE-Ausmaß einen Informationstransfer für eine Zustandsassoziation $D_k$ erfasst, zwischen einer Variablen $x_j$ und einer Variablen $x_i$, für $i \neq j$ gemäß dem Folgenden:

$$T^{D_k}_{x_j \rightarrow x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

wobei $\Sigma$ eine Summierung darstellt, $t$ eine Zeiteinheit darstellt, $p$ eine gemeinsame Wahrscheinlichkeit der Variablen darstellt und $|$ eine bedingte Wahrscheinlichkeit darstellt, wobei die Variablen $x_j$ und $x_i$ Zustände wenigstens einer Komponente der elektrischen Schaltung darstellen;
Schätzen von ATE+, TE und ATE- Trajektorien über die Zeit; und
auf Grundlage der geschätzten ATE+, TE und ATE- Trajektorien, Vorhersagen einer Instabilität in der elektronischen Schaltung.

12. Computerprogrammprodukt nach Anspruch 11, ferner umfassend Anweisungen zum Veranlassen, dass der einen Vorgang eines Schätzens der TE Trajektorie durchführt, durch den natürlichen Logarithmus (*ln*) mit einem unbekannten Koeffizienten *a* und einer Konstanten *c* gemäß dem Folgenden

$$g(t) = a\,l\,n(t) + c\,,$$

wobei *g(t)* die geschätzte TE Trajektorie darstellt und wobei *t* die Zeit darstellt.

13. Computerprogrammprodukt nach Anspruch 12, ferner umfassend Anweisungen zum Veranlassen, dass der Prozessor einen Vorgang eines Schätzens des unbekannten Koeffizienten *a* mit verschiedenen diskreten Zeitschritten durchführt, durch ein Nehmen der Ableitung von *g(t)* = *a* ln(*t*) + *c,* um zu erhalten:

$$g'(t) = \frac{a}{t}\,,$$

dann eines Erhaltens einer diskretisierten Version des unbekannten Koeffizienten *a* gemäß dem Folgenden

$$\frac{\Delta g}{\Delta t} = a\,\frac{1}{t}\,.$$

14. Computerprogrammprodukt nach Anspruch 13, ferner umfassend Anweisungen zum Veranlassen, dass der Prozessor einen Vorgang eines Bestimmens des unbekannten Koeffizienten *a* durchführt, gemäß dem Folgenden:

für einen fixierten Zeitschritt $\Delta t$ in einem Fenster [$T_{start}$, $T_{end}$], Bestimmen der folgenden Matrixgleichung:

$$\begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a = \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix},$$

wobei $t_1, ..., t_k + \Delta t \in$ [$T_{start}$, $T_{end}$]; und
Bestimmen einer Näherung von $a_{\Delta t}$ für den fixierten Zeitschritt $\Delta t$ gemäß dem Folgenden:

$$a_{\Delta t} = \underset{a}{argmin} \left\| \begin{bmatrix} \dfrac{1}{t_1+\Delta t/2} \\ \dfrac{1}{t_2+\Delta t/2} \\ \vdots \\ \dfrac{1}{t_k+\Delta t/2} \end{bmatrix} a - \begin{bmatrix} \dfrac{g(t_1+\Delta t)-g(t_1)}{\Delta t} \\ \dfrac{g(t_2+\Delta t)-g(t_2)}{\Delta t} \\ \vdots \\ \dfrac{g(t_k+\Delta t)-g(t_k)}{\Delta t} \end{bmatrix} \right\|_2 ,$$

wobei *argmin*$_a$ eine Minimierung darstellt, $t_k$ einen k-ten Zeitschritt darstellt und wobei die diesem Zeitschritt entsprechende Konstante *c ist:*

$$c_{\Delta t} = g(T_{\text{end}}) - a_{\Delta t} \ln(T_{\text{end}}).$$

**15.** Computerprogrammprodukt nach Anspruch 14, ferner umfassend Anweisungen zum Veranlassen, dass der Prozessor einen Vorgang eines Bestimmens eines vorhergesagten Werts für eine zukünftige Zeit $T_{end} + t_d$ durchführt, gemäß dem Folgenden:

$$\mathrm{F}_{\Delta t}(\mathrm{t_d}) = \mathrm{a}_{\Delta t} \ln(\mathrm{T}_{\text{end}} + \mathrm{t_d}) + \mathrm{c}_{\Delta t},$$

wobei $F_{\Delta t}$ ein vorhergesagter Wert für eine zukünftige Zeit ist und wobei $t_d$ eine gewünschte Zeitdauer für eine Vorhersage ist.

## Revendications

**1.** Système pour la prédiction de transitions critiques, le système comprenant :

un circuit électronique ayant une pluralité de composants, chaque composant ayant une série chronologique de mesures de tension ; et
un ou plusieurs processeurs (104) et un support (108) non transitoire lisible par ordinateur ayant des instructions exécutables codées sur celui-ci de sorte que, lors de leur exécution, les un ou plusieurs processeurs réalisent les opérations de :

la transformation de la série chronologique de mesures de tension provenant de la pluralité de composants du circuit électronique en un ensemble de séries chronologiques multivariées symboliques ;
la détermination d'une mesure d'entropie de transfert (TE) entre deux séries chronologiques dans l'ensemble de séries chronologiques multivariées symboliques sur une fenêtre temporelle glissante ;
la détermination d'une mesure d'entropie de transfert associative (ATE), dans lequel la mesure d'ATE est composée d'une classe d'influence positive ATE+ et d'une classe d'influence négative ATE-, et dans lequel la mesure d'ATE capture un transfert d'informations pour une association d'état $D_k$, entre une variable $x_j$ et une variable $x_i$, pour $i \neq j$ selon ce qui suit :

$$T^{D_k}_{x_j \to x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

où $\Sigma$ représente une somme, $t$ représente une unité de temps, $p$ représente une probabilité conjointe des variables, et | représente une probabilité conditionnelle, dans lequel les variables $x_j$ et $x_i$ représentent des états d'au moins un composant du circuit électrique ;
l'estimation de trajectoires d'ATE+, de TE et d'ATE- au cours du temps ; et
sur la base des trajectoires d'ATE+, de TE et d'ATE-estimées, la prédiction d'une instabilité du circuit électronique.

**2.** Système selon la revendication 1, dans lequel les un ou plusieurs processeurs réalisent en outre une opération d'estimation de la trajectoire de TE par le logarithme naturel *(ln)* avec un coefficient inconnu et une constante *c* selon ce qui suit :

$$g(t) = aln(t) + c,$$

où $g(t)$ représente la trajectoire de TE estimée, et où t représente le temps.

**3.** Système selon la revendication 2, dans lequel les un ou plusieurs processeurs réalisent en outre une opération d'estimation du coefficient inconnu *a* avec divers pas temporels discrets en prenant la dérivée de *g(t) = aln(t) + c* pour

obtenir

$$g'(t) = \frac{a}{t},$$

puis d'obtention d'une version discrétisée du coefficient inconnu a selon ce qui suit :

$$\frac{\Delta g}{\Delta t} = a \, \frac{1}{t}.$$

4. Système selon la revendication 3, dans lequel les un ou plusieurs processeurs réalisent en outre une opération de détermination du coefficient inconnu a selon ce qui suit :

pour un pas temporel fixe $\Delta t$ dans une fenêtre [$T_{start}$, $T_{end}$], la détermination de l'équation matricielle suivante :

$$\begin{bmatrix} \frac{1}{t_1+\Delta t/2} \\ \frac{1}{t_2+\Delta t/2} \\ \vdots \\ \frac{1}{t_k+\Delta t/2} \end{bmatrix} a = \begin{bmatrix} \frac{g(t_1+\Delta t)-g(t_1)}{\Delta t} \\ \frac{g(t_2+\Delta t)-g(t_2)}{\Delta t} \\ \vdots \\ \frac{g(t_k+\Delta t)-g(t_k)}{\Delta t} \end{bmatrix},$$

où $t_1, ..., t_k + \Delta t \in [T_{start}, T_{end}]$ ; et
la détermination d'une approximation de $a_{\Delta t}$ pour le pas temporel fixe $\Delta t$ selon ce qui suit :

$$a_{\Delta t} = \underset{a}{argmin} \left\| \begin{bmatrix} \frac{1}{t_1+\Delta t/2} \\ \frac{1}{t_2+\Delta t/2} \\ \vdots \\ \frac{1}{t_k+\Delta t/2} \end{bmatrix} a - \begin{bmatrix} \frac{g(t_1+\Delta t)-g(t_1)}{\Delta t} \\ \frac{g(t_2+\Delta t)-g(t_2)}{\Delta t} \\ \vdots \\ \frac{g(t_k+\Delta t)-g(t_k)}{\Delta t} \end{bmatrix} \right\|_2,$$

où *argmina* représente une minimisation, $t_k$ représente un k^ème pas temporel, et dans lequel la constante c correspondant à ce pas temporel est

$$c_{\Delta t} = g(T_{end}) - a_{\Delta t} \ln(T_{end}).$$

5. Système selon la revendication 4, dans lequel les un ou plusieurs processeurs réalisent en outre une opération de détermination d'une valeur prédite pour un temps futur $T_{end} + t_d$ selon ce qui suit :

$$F_{\Delta t}(t_d) = a_{\Delta t} \ln(T_{end} + t_d) + c_{\Delta t},$$

où $F_{\Delta t}$ est une valeur prédite pour un temps futur, et où $t_d$ est une durée souhaitée pour la prédiction.

6. Procédé mis en œuvre par ordinateur pour la prédiction de transitions critiques dans un circuit électronique ayant une pluralité de composants, comprenant une action suivante :
le fait d'amener un ou plusieurs processeurs (104) à exécuter des instructions stockées sur une mémoire (108) non transitoire de sorte que, lors de leur exécution, les un ou plusieurs processeurs réalisent les opérations de :

la transformation d'une série chronologique de mesures de tension provenant de la pluralité de composants du circuit électronique en un ensemble de séries chronologiques multivariées symboliques ;
la détermination d'une mesure d'entropie de transfert (TE) entre deux séries chronologiques dans l'ensemble de séries chronologiques multivariées symboliques sur une fenêtre temporelle glissante ;
la détermination d'une mesure d'entropie de transfert associative (ATE), dans lequel la mesure d'ATE est composée d'une classe d'influence positive ATE+ et d'une classe d'influence négative ATE-, et dans lequel la mesure d'ATE capture un transfert d'informations pour une association d'état $D_k$, entre une variable $x_j$ et une variable $x_i$, pour $i \neq j$ selon ce qui suit :

$$T^{D_k}_{x_j \to x_i} =$$

$$\sum_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

où $\Sigma$ représente une somme, t représente une unité de temps, p représente une probabilité conjointe des variables, et | représente une probabilité conditionnelle, dans lequel les variables $x_j$ et $x_i$ représentent des états d'au moins un composant du circuit électrique ;
l'estimation de trajectoires d'ATE+, de TE et d'ATE- au cours du temps ; et
sur la base des trajectoires d'ATE+, de TE et d'ATE-estimées, la prédiction d'une instabilité du circuit électronique.

7. Procédé selon la revendication 6, dans lequel les un ou plusieurs processeurs réalisent en outre une opération d'estimation de la trajectoire de TE par le logarithme naturel *(ln)* avec un coefficient inconnu a et une constante c selon ce qui suit :

$$g(t) = aln(t) + c,$$

où *g(t)* représente la trajectoire de TE estimée, et où t représente le temps.

8. Procédé selon la revendication 7, dans lequel le processeur de données réalise en outre une opération d'estimation du coefficient inconnu a avec divers pas temporels discrets en prenant la dérivée de *g(t) = aln(t)* + c pour obtenir

$$g'(t) = \frac{a}{t},$$

puis d'obtention d'une version discrétisée du coefficient inconnu a selon ce qui suit :

$$\frac{\Delta g}{\Delta t} = a \, \frac{1}{t}.$$

9. Procédé selon la revendication 8, dans lequel le processeur de données réalise en outre une opération de détermination du coefficient inconnu a selon ce qui suit :

pour un pas temporel fixe $\Delta t$ dans une fenêtre [$T_{start}$, $T_{end}$], la détermination de l'équation matricielle suivante :

$$\begin{bmatrix} \frac{1}{t_1 + \Delta t/2} \\ \frac{1}{t_2 + \Delta t/2} \\ \vdots \\ \frac{1}{t_k + \Delta t/2} \end{bmatrix} a = \begin{bmatrix} \frac{g(t_1 + \Delta t) - g(t_1)}{\Delta t} \\ \frac{g(t_2 + \Delta t) - g(t_2)}{\Delta t} \\ \vdots \\ \frac{g(t_k + \Delta t) - g(t_k)}{\Delta t} \end{bmatrix},$$

où $t_1, ..., t_k + \Delta t \in [T_{start}, T_{end}]$ ; et
la détermination d'une approximation de $a_{\Delta t}$ pour le pas temporel fixe $\Delta t$ selon ce qui suit :

$$a_{\Delta t} = \underset{a}{argmin} \left\| \begin{bmatrix} \frac{1}{t_1+\Delta t/2} \\ \frac{1}{t_2+\Delta t/2} \\ \vdots \\ \frac{1}{t_k+\Delta t/2} \end{bmatrix} a - \begin{bmatrix} \frac{g(t_1+\Delta t)-g(t_1)}{\Delta t} \\ \frac{g(t_2+\Delta t)-g(t_2)}{\Delta t} \\ \vdots \\ \frac{g(t_k+\Delta t)-g(t_k)}{\Delta t} \end{bmatrix} \right\|_2,$$

où *argmina* représente une minimisation, $t_k$ représente un $k^{ème}$ pas temporel, et dans lequel la constante c correspondant à ce pas temporel est

$$c_{\Delta t} = g(T_{\text{end}}) - a_{\Delta t} \ln(T_{\text{end}}).$$

10. Procédé selon la revendication 9, dans lequel le processeur de données réalise en outre une opération de détermination d'une valeur prédite pour un temps futur $T_{\text{end}} + t_d$ selon ce qui suit :

$$F_{\Delta t}(t_d) = a_{\Delta t} \ln(T_{\text{end}} + t_d) + c_{\Delta t},$$

où $F_{\Delta t}$ est une valeur prédite pour un temps futur, et où $t_d$ est une durée souhaitée pour la prédiction.

11. Produit-programme d'ordinateur pour la prédiction de transitions critiques dans un circuit électronique ayant une pluralité de composants, le produit-programme d'ordinateur comprenant des instructions lisibles par ordinateur stockées sur un support (108) non transitoire lisible par ordinateur qui sont exécutables par un ordinateur ayant un processeur (104) pour amener le processeur à réaliser les opérations de :

la transformation d'une série chronologique de mesures de tension provenant de la pluralité de composants du circuit électronique en un ensemble de séries chronologiques multivariées symboliques ;
la détermination d'une mesure d'entropie de transfert (TE) entre deux séries chronologiques dans l'ensemble de séries chronologiques multivariées symboliques sur une fenêtre temporelle glissante ;
la détermination d'une mesure d'entropie de transfert associative (ATE), dans lequel la mesure d'ATE est composée d'une classe d'influence positive ATE+ et d'une classe d'influence négative ATE-, et dans lequel la mesure d'ATE capture un transfert d'informations pour une association d'état $D_k$, entre une variable $x_j$ et une variable $x_i$, pour $i \neq j$ selon ce qui suit :

$$T_{x_j \to x_i}^{D_k} =$$

$$\sum\nolimits_{(x_{i,t+1}, x_{i,t}, x_{j,t}) \in D_k} p(x_{i,t+1}, x_{i,t}, x_{j,t}) \log \frac{p(x_{i,t+1}|x_{i,t}, x_{j,t})}{p(x_{i,t+1}|x_{i,t})},$$

où $\Sigma$ représente une somme, $t$ représente une unité de temps, $p$ représente une probabilité conjointe des variables, et | représente une probabilité conditionnelle, dans lequel les variables $x_j$ et $x_i$ représentent des états d'au moins un composant du circuit électrique ;
l'estimation de trajectoires d'ATE+, de TE et d'ATE- au cours du temps ; et
sur la base des trajectoires d'ATE+, de TE et d'ATE- estimées, la prédiction d'une instabilité du circuit électronique.

12. Produit-programme d'ordinateur selon la revendication 11, comprenant en outre des instructions pour amener le processeur à réaliser une opération d'estimation de la trajectoire de TE par le logarithme naturel *(ln)* avec un coefficient inconnu a et une constante c selon ce qui suit :

$$g(t) = a \ln(t) + c,$$

où *g(t)* représente la trajectoire de TE estimée, et où t représente le temps.

**13.** Produit-programme d'ordinateur selon la revendication 12, comprenant en outre des instructions pour amener le processeur à réaliser une opération d'estimation du coefficient inconnu a avec divers pas temporels discrets en prenant la dérivée de *g(t) = aln(t) + c* pour obtenir

$$g'(t) = \frac{a}{t},$$

puis d'obtention d'une version discrétisée du coefficient inconnu *a* selon ce qui suit :

$$\frac{\Delta g}{\Delta t} = a \; \frac{1}{t}.$$

**14.** Produit-programme d'ordinateur selon la revendication 13, comprenant en outre des instructions pour amener le processeur à réaliser une opération de détermination du coefficient inconnu a selon ce qui suit :

pour un pas temporel fixe $\Delta t$ dans une fenêtre $[T_{start}, T_{end}]$, la détermination de l'équation matricielle suivante :

$$\begin{bmatrix} \frac{1}{t_1+\Delta t/2} \\ \frac{1}{t_2+\Delta t/2} \\ \vdots \\ \frac{1}{t_k+\Delta t/2} \end{bmatrix} a = \begin{bmatrix} \frac{g(t_1+\Delta t)-g(t_1)}{\Delta t} \\ \frac{g(t_2+\Delta t)-g(t_2)}{\Delta t} \\ \vdots \\ \frac{g(t_k+\Delta t)-g(t_k)}{\Delta t} \end{bmatrix},$$

où $t_1, ..., t_k + \Delta t \in [T_{start}, T_{end}]$ ; et
la détermination d'une approximation de $a_{\Delta t}$ pour le pas temporel fixe $\Delta t$ selon ce qui suit :

$$a_{\Delta t} = \underset{a}{argmin} \left\| \begin{bmatrix} \frac{1}{t_1+\Delta t/2} \\ \frac{1}{t_2+\Delta t/2} \\ \vdots \\ \frac{1}{t_k+\Delta t/2} \end{bmatrix} a - \begin{bmatrix} \frac{g(t_1+\Delta t)-g(t_1)}{\Delta t} \\ \frac{g(t_2+\Delta t)-g(t_2)}{\Delta t} \\ \vdots \\ \frac{g(t_k+\Delta t)-g(t_k)}{\Delta t} \end{bmatrix} \right\|_2,$$

où *argmina* représente une minimisation, $t_k$ représente un $k^{ème}$ point temporel, et dans lequel la constante c correspondant à ce pas temporel est

$$c_{\Delta t} = g(T_{end}) - a_{\Delta t} \ln(T_{end}).$$

**15.** Produit-programme d'ordinateur selon la revendication 14, comprenant en outre des instructions pour amener le processeur à réaliser une opération de détermination d'une valeur prédite pour un temps futur $T_{end} + t_d$ selon ce qui suit :

$$F_{\Delta t}(t_d) = a_{\Delta t} \ln(T_{end} + t_d) + c_{\Delta t},$$

où $F_{\Delta t}$ est une valeur prédite pour un temps futur, et où $t_d$ est une durée souhaitée pour la prédiction.

FIG. 1

EP 2 972 090 B1

FIG. 2

FIG. 3A
PRIOR ART

Ant1
Ant2
i1
i2

Voltage

Time

Peak when fully
synchronized

FIG. 3B
PRIOR ART

TE
ATE+
ATE-

0          800          1200          2000

Time

ATE- flattens
before fully
synchronized

EP 2 972 090 B1

FIG. 4A

FIG. 4B

FIG. 5

FIG. 6A

EP 2 972 090 B1

FIG. 6B

EP 2 972 090 B1

700 — Transform a set of multivariate time series of observables of a complex system into a set of symbolic multivariate time series

702 — Determine pair-wise series of a TE measure

704 — Determining an ATE measure

706 — Estimating TE/ATE+/ATE- trajectories over time

708 — Predicting a critical transition in the complex system using at least one of the TE/ATE+/ATE- trajectories

FIG. 7

33

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 90494513
- US 61784167

- US 904945

**Non-patent literature cited in the description**

- **LUNGARELLA et al.** Information transfer at multiple scales. *Physical Review E*, 27 November 2007, 1-10
- **O. KWON** ; **J.-S. YANG**. *Information Flow between Stock Indices*, 2008
- **H. MOON** ; **T.-C. LU**. Early Warning Signal of Complex Systems: Network Spectrum and Critical Transitions. *WIN*, 2010
- **H. MOON** ; **T.-C. LU**. *Network Catastrophe: Self-Organized Patterns Reveal both the Instability and the Structure of Complex Networks*, 2012

- **M. STANIEK** ; **K. LEHNERTZ**. Symbolic Transfer Entropy. *Physical Review Letters*, 2008, vol. 100, 15801
- **M. SCHEFFER** ; **J. BASCOMPTE** ; **W.A. BROCK** ; **V. BROVKIN** ; **S.R. CARPENTER** ; **V. DAKOS** ; **H. HELD** ; **E.H. VAN NES** ; **M. RIETKERK** ; **G. SUGIHARA**. Early-warning signals for critical transitions. *Nature*, 2009, vol. 461
- **T. SCHREIBER**. Measuring information Transfer. *Phys. Rev, Lett.*, 2000, vol. 85, 461